Europäisches Patentamt

European Patent Office

Office européen des brevets

(19)

(11) Veröffentlichungsnummer : **0 401 681 B1**

## (12) EUROPÄISCHE PATENTSCHRIFT

(45) Veröffentlichungstag der Patentschrift :
**13.09.95 Patentblatt 95/37**

(51) Int. Cl.$^6$ : **H04M 3/62,** H04M 3/22

(21) Anmeldenummer : **90110346.5**

(22) Anmeldetag : **31.05.90**

(54) **Abfrageplatz einer Fernsprechvermittlungsanlage.**

(30) Priorität : **05.06.89 DE 3918258**

(43) Veröffentlichungstag der Anmeldung :
**12.12.90 Patentblatt 90/50**

(45) Bekanntmachung des Hinweises auf die
Patenterteilung :
**13.09.95 Patentblatt 95/37**

(84) Benannte Vertragsstaaten :
**AT BE CH DE DK ES FR GB IT LI NL SE**

(56) Entgegenhaltungen :
**DE-A- 3 423 819
DE-A- 3 506 910
US-A- 4 698 618
TELESIS Bd. 13, Nr. 4, 1986, Ottawa, CA; Seiten 5 - 11; O'CAHAN et al.:"Tops MP combines toll, directory assistance, and other services into one workstation"**

(73) Patentinhaber : **Alcatel SEL
Aktiengesellschaft
Lorenzstrasse 10
D-70435 Stuttgart (DE)**
(84) **DE**
Patentinhaber : **ALCATEL N.V.
Strawinskylaan 341,
(World Trade Center)
NL-1077 XX Amsterdam (NL)**
(84) **BE CH DK ES FR GB IT LI NL SE AT**

(72) Erfinder : **Münsterberg, Günter
Grabenäcker Strasse 14
D-7141 Möglingen (DE)**

(74) Vertreter : **Gähr, Hans-Dieter, Dipl.-Ing. (FH) et al
Alcatel SEL AG
Patent- und Lizenzwesen
Postfach 30 09 29
D-70449 Stuttgart (DE)**

**Beschreibung**

Die Erfindung betrifft einen Bedien- oder Abfrageplatz einer Fernsprechvermittlungsanlage, mit einer eine Vielzahl von Funktionstasten aufweisenden Tastatur und mit einer Anzeigeeinheit.

Heutige Fernsprechvermittlungsanlagen weisen eine Vielzahl von Leistungsmerkmalen auf, zu deren Inanspruchnahme in einem Abfrageplatz eine Vielzahl von Tasten notwendig sind. Dabei werden den Tasten unterschiedliche Funktionen zugeordnet, die durch Bestätigung durch die Bedienungsperson aktiviert werden.

Die Anzahl der ausführbaren Funktionen hängt somit direkt von der Anzahl der zur Verfügung stehenden Tasten ab. Es sind bereits Verfahren wie die Vielfachzuordnung von Funktionen oder die freie Zunordnung einer Funktion zu einer Taste bekannt, wobei für alle diese Lösungen aufgrund der vorgegebenen Anzahl von Tasten nur eine begrenzte Anzahl von Funktionen ausführbar sind.

Insbesondere im sogenannten Servicebetrieb, d.h. dann, wenn der Abfrageplatz nicht im Telefoniebetrieb arbeitet, wenn also die Fernsprechvermittlungsanlage z.B. neu konfiguriert oder Berechtigungen geändert werden sollen oder Wartungsprozeduren durchgeführt werden sollen, ist aufgrund der endlichen Anzahl von Tasten und damit Funktionen der Abfrageplatz nur beschränkt einsetzbar.

Ebenfalls ist aus der US-Patentschrift US-4,698,618 eine Tastatur zur Verwendung mit einem Terminal in einem Hilfssystem für eine Telefonvermittlung bekannt. Hierbei existieren verschiedene Funktionstastenblöcke, die in Abhängigkeit von ihren Funktionen gruppenweise und getrennt von einem Tastenblock mit einer numerischen Tastatur angebracht sind.

Die Anordnung der Tastenblöcke ist so gewählt, daß eine Bedienung eine Vereinfachung in der Handhabung darstellt, und somit die Programmierzeit und die Anzahl der Eingabefehler verkürzt. Demgemäß sind Tasten mit ähnlichen Funktionen beieinander angeordnet. Desweiteren sind sogeannte Makrotasten vorgesehen, die nach deren Betätigung eine Folge von Funktionen auslösen.

In der deutschen Offenlegungsschrift OS-DE 34 23 819 Al wird ein tastenaufweisendes Endgerät einer Fernmeldeanlage beansprucht, bei denen den Tasten unterschiedliche Funktion in Abhängigkeit von einer vorangegangenen Tastenbetätigung bzw. Betriebszuständen zugeordnet werden, unter der Voraussetzung, daß den Tasten zugeordnete Speicherplätze eines Speichers zur Auslösung bereitstehen. Hierbei werden im Rahmen einer Aufgabe einem Teil der Tasten oder sämtlichen Tasten bestimmte Funktionen zugewiesen. Desweiteren ist es möglich, entsprechend der vorliegenden Aufgabe ein Sperren oder Freigeben der Tasten vorzusehen.

Die Aufgabe der Erfindung besteht nun darin, einen Bedien- oder Abfrageplatz einer Fernsprechvermittlungsanlage so zu realisieren, daß ein unbeschränkter Einsatz im Servicebetrieb möglich ist.

Diese Aufgabe wird erfindungsgemäß durch die Lehre des Hauptanspruches gelöst.

Durch die Umschaltung der vorhandenen Funktionstasten des Abfrageplatzes in eine alphanumerische Tastatur ist es erfindungsgemäß möglich jeden beliebigen Befehl für den Servicebetrieb direkt einzugeben, wobei durch die Anzeigeeinheit des Abfrageplatzes eine direkte Überprüfung möglich ist.

Ferner können zur normalen Anzeigeeinheit auch noch ein Datensichtgerät und ein Protokolldrucker parallel geschaltet werden, um einen komfortablen Servicebetrieb zu ermöglichen.

Der Abfrageplatz kann mittels eines speziellen Schlüsselschalters oder einer bestimmten Umschalttaste in Verbindung mit einem einzugebenden Passwort vom Telefoniebetrieb in den Servicebetrieb und umgekehrt umgeschaltet werden.

Weitere vorteilhafte Ausgestaltungen des Gegenstandes der Erfindung sind den Unteransprüchen zu entnehmen.

Im folgenden wird ein Ausführungsbeispiel der Erfindung anhand der Zeichnungen erläutert. Es zeigen:

Fig. 1.            einen Bedien- oder Abfrageplatz im Telefoniebetrieb und
Fig. 2.            einen Bedien- oder Abfrageplatz im Servicebetrieb.

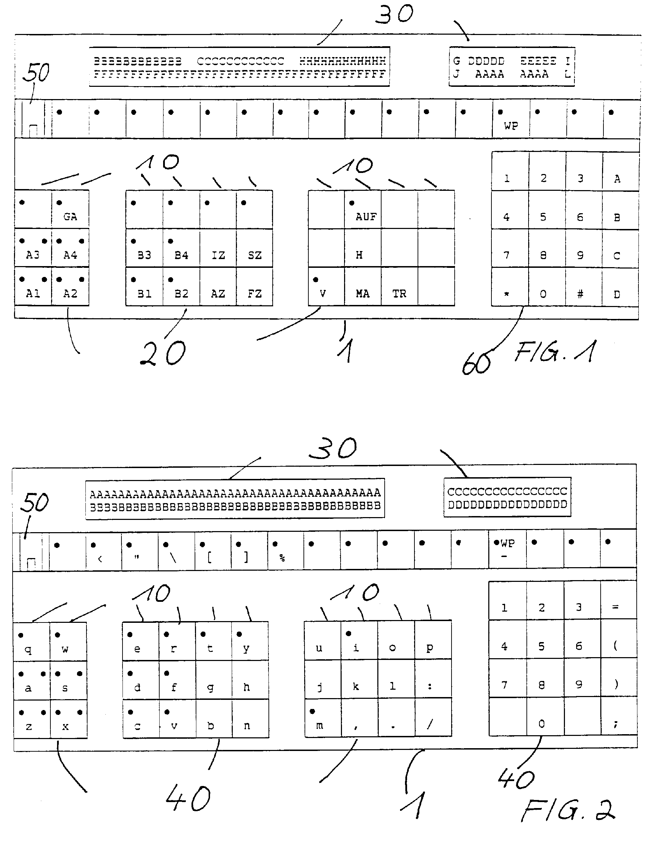

Ein Bedien- oder Abfrageplatz 1 einer Fernsprechvermittlungsanlage, wie in Figur 1 und in Figur 2 gezeigt, weist im wesentlichen eine Vielzahl von Funktionstasten 10 einer Tastatur 20 auf.

Die Funktionstasten 10 wie in Figur 1 gezeigt, sind für den üblichen Telefoniebetrieb ausgelegt und weisen im wesentlichen Funktionen wie Abfragetasten A1 ... A4, Gebührenabfrage GA, Bündeltasten B1 ... B4, Zuweisungstasten AZ, FZ, IZ, SZ, Makeltaste MA, Voranmeldetaste V, Haltetaste H, Trenntaste TR, Aufschaltetaste AUF und Nachtschaltung NA, sowie einen Wahlblock 60 auf. Es gibt noch eine Reihe weiterer Funktionstasten, die hier nicht weiter erläutert werden. Außerdem ist ein spezieller Schlüsselschalter 50 zur Umschaltung des Abfrageplatzes 1 in den Service- oder in den Telefoniebetrieb vorgesehen.

Ferner ist der Abfrageplatz mit einer Anzeigeeinheit 30 ausgestattet, zur Anzeige der gerade vorherrschenden Verbindungsart oder des Verbindungszustandes der angeschlossenen Teilnehmerapparate der Fernsprechvermittlungsanlage.

Wenn nun die Bedienungsperson den Schlüsselschalter 50 betätigt, wird der Abfrageplatz 1 von dem Telefoniebetrieb automatisch in den Servicebetrieb umgeschaltet, wobei diese neue Betriebsart durch eine langsam flackernde Leuchtdiode WP angezeigt wird. Durch diese Umschaltung sind jetzt erfindungsgemäß die Funktionstasten des Abfrageplatzes als alphanumerische Tastatur 40 verwendbar (wie in Figur 2 gezeigt).

Jetzt können die verschiedensten Servicebefehle direkt (z.B. durch Verwendung des Standard ASCII Zeichensatzes) eingegeben werden. Zur Erleichterung der Bedingung kann eine Schablone über die Tastatur gelegt werden oder die Tasten können doppelt beschriftet ausgeführt sein.

Die Anzeigeeinheit 30, die hier als zweizeiliges Display mit je 40 Zeichen ausgebildet ist, dient zur Funktionskontrolle.

Es können auch zu einer Komfortausstattung ein parallel geschaltetes Datensichtgerät und ein Protokolldrucker (nicht gezeigt) benutzt werden.

Der Abfrageplatz und die Vermittlungsanlage sind über eine Ablaufsteuerung (nicht gezeigt) miteinander verbunden, wobei in einem Systemspeicher die den alphanumerisch eingebbaren Befehlen zugeordneten Funktionsabläufe abgespeichert sind.

Einige solcher Befehle und die zugehörigen Funktionsabläufe sind in der folgenden Zusammenstellung gezeigt:

Funktions-/Befehlstabelle

```
ÄNDERN/ABFRAGE        BEFEHL    / Bemerkungen
von
------------------------------------------------------------
Sammelkurzwahl-       ABC NAB=22, NUM=07118210;
Tabelle                         Eintragen der Zielnummer
                                07118210 in Position 22
                                der Sammelkurzwahltabelle
                      ABC NAB=-;
                                Löschen aller Einträge in
                                der Sammelkurzwahltabelle
------------------------------------------------------------
Einzelkurzwahl-       ABI TAB=33, NAB=7, NUM=8215212, DL=0;
Tabelle                         Eintragen der Zielnummer
                                8215212 in Position 33 der
                                7. Einzelkurzwahltabelle,
                                logische Richtung 0
------------------------------------------------------------
Rufnummernsperre      DI TAB=3, NUM=(19, 1699, -974);
                                Sperren der Nummern 19 und
                                1699 und Löschen der
                                Nummer 974 der 3.
                                Rufnummernsperrtabelle
------------------------------------------------------------
Teilnehmer-           CAT NA=1101, CS=1;
Berechtigung                    Aktivieren der
                                Berechtigung 1 für den
                                Teilnehmer 1101
------------------------------------------------------------
```

```
ÄNDERN/ABFRAGE        BEFEHL    / Bemerkungen
von

------------------------------------------------

Terminal-             MEHT NA=1101;
Betriebszustand              Statusanzeige von
                             Teilnehmer 1101
                      MEHT NA=(1101:1107), ES=-;
                             Deaktivieren der
                    .        Teilnehmer 1101 bis 1107

------------------------------------------------

Nacht-Sammel-         GP GP=0, NA=1115;
anschluß (GP=0)              Aufnehmen des Teilnehmers
                             1115 in den
                             Nachtsammelanschluß
                      GP GP=0, NA=-;
                             Herausschalten aller
                             Teilnehmer aus dem
                             Nacht-Sammelanschluß

------------------------------------------------
```

Somit ist mittels der alphanumerischen Tastatur der Abfragestelle 1 ein universeller Einsatz im Servicebetrieb möglich.

Zur Beendigung des Servicebetriebes wird durch Betätigung des Schlüsselschalters 50 der Abfrageplatz wieder in den Telefoniebetrieb umgeschaltet, wobei über die einzelnen Funktionstasten jetzt wieder die zugeordneten Telefoniefunktionen abrufbar sind

**Patentansprüche**

1. Bedien- oder Abfrageplatz (1) einer Fernsprechvermittlungsanlage, mit einer eine Vielzahl von Funktionstasten (10) aufweisenden Tastatur (20) und mit einer Anzeigeeinheit (30),
**dadurch gekennzeichnet,**
daß Mittel (50) zur Umschaltung des Abfrageplatzes (1) von einem Telefoniebetrieb in einen Servicebetrieb vorgesehen sind, wodurch die Funktionstasten (10) in eine alphanumerische Tastatur (40) umgeschaltet werden und der Bedien- oder Abfrageplatz dergestalt ist, daß die alphanumerisch über die Tasten eingegebenen Befehle auf der Anzeigeeinheit (30) ausgegeben werden.

2. Bedien- oder Abfrageplatz nach Anspruch 1, mit einem der Anzeigeeinheit (30) parallel geschalteten Datensichtgerät.

3. Bedien- oder Abfrageplatz nach Anspruch 1 oder 2, mit einem der Anzeigeeinheit (30) parallel geschalteten Protokolldrucker.

4. Bedien- oder Abfrageplatz nach Anspruch 1, mit einem Schlüsselschalter (50) oder einer Umschalttaste zum Umschalten vom Telefoniebetrieb in den Servicebetrieb und umgekehrt.

5. Bedien- oder Abfrageplatz nach einem der vorhergehenden Ansprüche, mit einer den Abfrageplatz (1) und die Vermittlungsanlage verbindenen Ablaufsteuerung, die einen Systemspeicher enthält, in dem die den alphanumerisch eingebbaren Befehlen angeordneten Funktionsabläufe abgespeichert sind.

## Claims

1. Operator's console or inquiry station (1) of a telephone exchange, having a keyboard (20) with a number of function keys (10), and having a display unit (30), **characterised in that** means are provided for switching the inquiry station (1) from a telephony mode to a service mode, whereby the function keys (10) in an alphanumeric keyboard (40) are changed over and the operator's console or inquiry station is such that the commands entered alphanumerically via the keys are output on the display unit (30).

2. Operator's console or inquiry station according to Claim 1, having a visual display unit connected in parallel with the display unit (30).

3. Operator's console or inquiry station according to Claim 1 or 2, having a page printer connected in parallel with the display unit (30).

4. Operator's console or inquiry station according to Claim 1, having a key switch (50) or a changeover key for switching from the telephony mode to the service mode and vice versa.

5. Operator's console or inquiry station according to one of the preceding Claims, having a sequence controller connecting the inquiry station (1) and the switching system, which sequence controller contains a system memory in which the function sequences assigned to the alphanumerically entered commands are stored.

## Revendications

1. Poste d'opératrice (1) d'un central téléphonique, comportant un clavier (20) présentant une pluralité de touches de fonction (10) et un visuel (30),
   caractérisé
   par le fait que sont prévus des moyens pour faire commuter le poste d'opératrice (1), d'une exploitation téléphonique, en une exploitation de service, ce par quoi les touches de fonction (10) sont commutées en un clavier alphanumérique (40) et par le fait que le poste d'opératrice est conçu de façon que les instructions entrées en alphanumérique par l'intermédiaire des touches soient envoyées sur le visuel (30).

2. Poste d'opératrice selon la revendication 1, comportant un appareil de visualisation des données monté en parallèle au visuel (30).

3. Poste d'opératrice selon la revendication 1 ou 2, comportant une imprimante de protocole montée en parallèle au visuel (30).

4. Poste d'opératrice selon la revendication 1, comportant un commutateur à clé (50) ou une touche de commutation pour commuter, de l'exploitation téléphonique, sur l'exploitation de service et inversement.

5. Poste d'opératrice selon l'une des revendications précédentes, comportant un circuit de commande d'ordinogramme qui relie le poste d'opératrice (1) et le central téléphonique et contient une mémoire du système dans laquelle sont mémorisés les déroulements de fonction correspondants aux instructions qui peuvent entrer en alphanumérique.

**FIG. 1** (30, 50, 10, 20, 1, 60)

Display:
```
BBBBBBBBBBB   CCCCCCCCCCC   HHHHHHHHHHH          G DDDDD  EEEEE I
FFFFFFFFFFFFFFFFFFFFFFFFFFFFFFFFFFFFFFFFFFFF     J  AAAA  AAAA  L
```

Top row keys: • • • • • • • • • • • • • WP • • •

| | GA | | | | | | | | | 1 | 2 | 3 | A |
|---|---|---|---|---|---|---|---|---|---|---|---|---|---|
| A3 | A4 | | B3 | B4 | IZ | SZ | | AUF | | | 4 | 5 | 6 | B |
| A1 | A2 | | B1 | B2 | AZ | FZ | | H | | | 7 | 8 | 9 | C |
| | | | | | | | V | MA | TR | | * | 0 | # | D |

FIG. 1

**FIG. 2** (30, 50, 10, 1, 40)

Display:
```
AAAAAAAAAAAAAAAAAAAAAAAAAAAAAAAAAAAAAAAAAAAA     CCCCCCCCCCCCCCCCC
BBBBBBBBBBBBBBBBBBBBBBBBBBBBBBBBBBBBBBBBBBBB     DDDDDDDDDDDDDDDDD
```

Top row keys: • • < " \ [ ] % • • • • •WP – • • •

| q | w | | e | r | t | y | | u | i | o | p | | 1 | 2 | 3 | = |
|---|---|---|---|---|---|---|---|---|---|---|---|---|---|---|---|---|
| a | s | | d | f | g | h | | j | k | l | : | | 4 | 5 | 6 | ( |
| z | x | | c | v | b | n | | m | , | . | / | | 7 | 8 | 9 | ) |
| | | | | | | | | | | | | | | 0 | | ; |

FIG. 2

7